# EUROPEAN PATENT SPECIFICATION

(11) **EP 4 270 620 B1**
(45) Date of publication and mention of the grant of the patent: **02.12.2026**
(21) Application number: 22887433.5
(22) Date of filing: 13.10.2022
(51) Int. Cl.: H01M 50/242, H01M 50/502, H01M 50/211, H01M 10/6551, H01M 10/613

(54) **BATTERY PACK**
BATTERIEPACK
BLOC-BATTERIE

(30) Priority: 26.10.2021 KR 20210143937
(43) Date of publication of application: 01.11.2023
(73) Proprietor: LG Energy Solution, Ltd., Seoul 07335 (KR)
(72) Inventor: SHIN, Ju Hwan, Daejeon 34122 (KR); LEE, Tae Kyeong, Daejeon 34122 (KR); LEE, Jae Hyun, Daejeon 34122 (KR); LEE, Hyoung Suk, Daejeon 34122 (KR)
(74) Representative: Plasseraud IP
(86) International application number: PCT/KR2022/015524
(87) International publication number: WO 2023/075230

(56) References cited:
- WO-A1-2018/221002
- WO-A1-2021/086070
- WO-A1-2021/096333
- CN-U- 206 379 400
- CN-U- 208 422 982
- CN-U- 213 366 723
- JP-B2- 5 154 454
- JP-U- H0 726 224
- KR-A- 20180 114 475
- KR-A- 20210 056 074
- KR-B1- 102 187 056
- KR-B1- 102 277 035
- US-A1- 2020 235 445
- US-A1- 2020 303 695
- US-A1- 2020 411 816

## Description

### [Technical Field]

The present invention relates to a battery pack.

More specifically, the present invention relates to the battery pack that can regulate movement of a plurality of battery modules in the height direction accommodated in the battery pack.

This application claims the benefit of a priority based on Korean Patent Application No. 10-2021-0143937, filed on October 26, 2021.

### [Background Art]

Recently, secondary batteries capable of charging and discharging have been widely used as energy sources of wireless mobile devices. Further, secondary batteries have been drawing attention as energy sources of electric vehicles, hybrid electric vehicles, and the like, and proposed as solutions to solve air pollution of existing gasoline vehicles using fossil fuels, diesel vehicles that use fossil fuels. Accordingly, kinds of applications using secondary batteries have diversified in many directions because of the advantages of secondary batteries, and in the future, secondary batteries are expected to be applied to even more fields and products.

In addition, as a power source of Electric Storage System (ESS) and electric vehicles, etc., the demand for the battery module that internally accommodates a plurality of secondary batteries that are electrically connected in series/parallel and the demand for the battery pack that is composed of such battery modules have been increasing.

Such battery module/battery pack has an outer housing made of a metal material in order to protect a plurality of secondary batteries from external shock or to store a plurality of secondary batteries.

The battery pack may be configured in various forms such as installing battery modules in a plurality of individual accommodating grooves separated by partition walls, or accommodating a plurality of battery modules at once in a single battery pack case, etc. The form of the battery pack can vary depending on the shape, size, and electrical connection structure of the battery module being accommodated.

When a plurality of battery modules is accommodated in a single battery pack case all at once, an adhesive resin may be applied to the bottom of the pack case in order to adhesively fixate the battery modules. In this case, because the adhesive resin is not evenly charged between the battery module and the pack case, the height of the battery modules may not be even. In the case of large battery modules accommodating a plurality of battery cells, because the strength of its own weight pressurizing adhesive resin layer is big, the problem of height unevenness mentioned above may not be significant. However, in the case where a battery pack accommodates small battery modules accommodating relatively small number of battery cells, it might be difficult to uniformly couple busbars between the modules due to the height unevenness mentioned above.

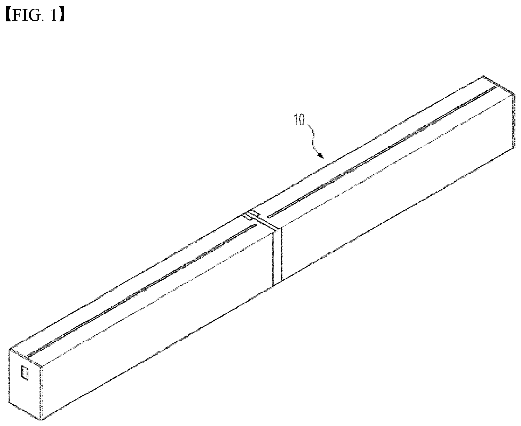

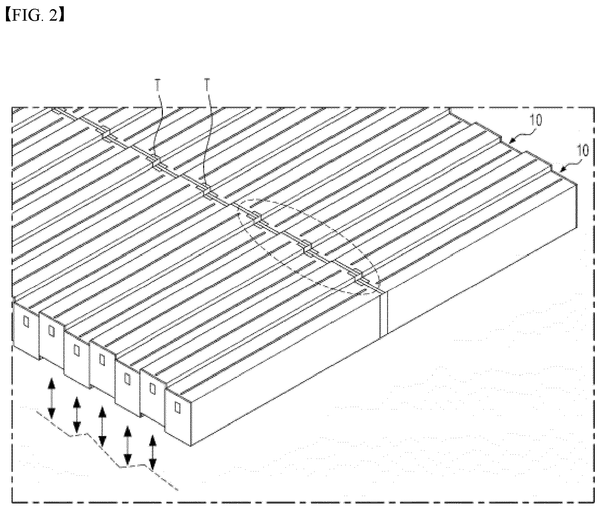

FIG. 1 is a perspective view of a battery module with expandability suggested by the present applicant, and FIG. 2 is a partial perspective view of a state in which a plurality of expandable battery modules is accommodated in a pack case.

The present applicant formed a battery cell assembly by forming a longitudinal direction unit cell by arranging battery cells in series in the longitudinal direction, and stacking two or more rows of the longitudinal direction unit cell in the thickness direction of the battery cell. In addition, based on the shape of such battery cell assembly, a module case was manufactured to be extended in the longitudinal direction and was manufactured in a shape surrounding the battery cell assembly. Such battery module accommodates relatively small number of battery cells in each module case, and by stacking the battery modules in the longitudinal direction or thickness direction of the battery cell like Lego blocks, it can freely configure a battery pack considering the space where the battery module is installed or the space where the battery pack is installed. As such, because the battery module suggested by the present applicant can manufacture various types of battery packs depending on the stacking (designing) method, it can be referred to as an expandable battery module.

However, the expandable battery module 10 is relatively lightweight because it accommodates small number of battery cells. Therefore, when a pack case charged with adhesive resin layer is accommodating a plurality of battery modules 10, the height in the width direction (perpendicular to the longitudinal direction) of the battery module may not be uniform as shown in FIG. 2. In this case, as illustrated in FIG. 2, when an electronic component (high voltage busbar) is welded to the terminal busbar T provided in the center of the battery module along the width direction of the battery module, a gap may occur in the weld due to deviation. Especially, when a heat sink 40 is installed in the upper part of the battery module, if the height of the battery module is uneven, a gap occurs between the heat sink 40 and the battery module or between the heat sink 40 and the adhesive resin being charged at the upper part of the battery module, and this may cause increase in thermal resistance.

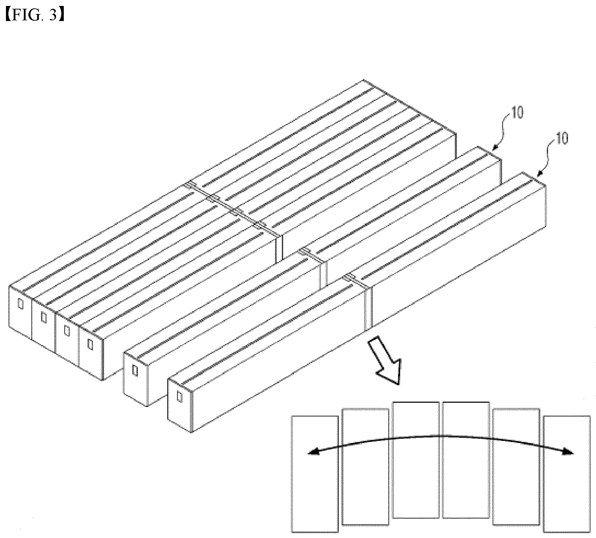

FIG. 3 is a schematic diagram showing how swelling occurs when stacking an expandable battery module 10 proposed by the present applicant.

For example, it is possible to assemble battery modules into a pack case with the same height without charging the adhesive resin layer, and even if it gets charged, the battery module 10 can be evenly pressurized and assembled into the pack case, eliminating the height unevenness during assembly as illustrated in FIG. 2.

However, when a plurality of battery modules is used after being stacked and stored inside the battery pack, assembly deformation may occur due to swelling as the battery cell within the battery module goes through the charge-discharge process under the conditions of use. When a plurality of battery cells within the battery module experience swelling, the module case thereupon receives stress. Consequently, as illustrated in the bottom drawing in FIG. 3, the assembly form of the scalable battery modules is deformed. When the assembly gets deformed, electrical connecting members such as a sensing cable and a sensing terminal that connects each battery module are also deformed, leading to contact failure when transmitting electricity to BMS or other external devices, and in extreme cases, electrical connection may be lost due to disconnection.

Accordingly, when assembling a plurality of battery modules by layering inside the pack case, development of a battery module related technology is required that allows the height of each battery module to be even, and prevents assembly deformation in the battery module due to swelling when using the battery pack.

WO2018221002 and US2020411816 relate to a battery pack.

### [Related Art Document]

### [Patent Document]

(Patent Document 1) Korean Registered Patent Publication No. 10-1979888

### [Disclosure]

### [Technical Problem]

The present invention has been proposed to solve the above problems, and the present invention is directed to provide a battery pack capable of maintaining a uniform height of the battery modules even after assembling a plurality of battery modules in a pack case.

In addition, the present invention is directed to provide a battery pack with a coupling structure that can maximize an internal space utilization by stably fixing a battery module inside the pack by minimizing fastening points, and can improve the coupling rigidity between the battery module and the pack case.

### [Technical Solution]

The battery pack according to present invention that can solve the above problems is defined by the independent claim 1.

Preferred embodiments are defined in the dependent claims 2 to 10.

### [Advantageous Effects]

According to the present invention, because the height of a plurality of battery modules can be maintained uniformly when being assembled into the pack case, it can make welding of an electronic components such as a busbar easier, and can prevent gap between the battery modules from occurring when a heat sink is installed in the upper part.

In addition, even after the battery module is assembled and accommodated into the pack case, it can prevent the height deformation due to swelling.

Moreover, when assembling a battery module into a pack, the present invention is directed to provide a battery pack with a coupling structure that can maximize an internal space utilization by stably fixing the battery module inside the pack by minimizing the fastening points, and can improve the coupling rigidity between the battery module and the pack case.

### [Brief Description of the Drawings]

FIG. 1 is a perspective view of a battery module with expandability proposed by the present applicant.
FIG. 2 is a partial perspective view illustrating a state in which a plurality of expandable battery modules are accommodated in a pack case.
FIG. 3 is a schematic diagram showing how swelling occurs when a battery module having expandability proposed by the present applicant is stacked.
FIG. 4 is an exploded perspective view showing an exemplary embodiment of an expandable battery module.
FIG. 5 is a perspective view illustrating a pack case structure of a battery pack in an exemplary embodiment of the prevent invention.
FIG. 6 is a side cross-sectional view illustrating an exemplary embodiment of a coupling structure of a retention bar, a pack case, and a battery module, which are main parts of the present invention.
FIG. 7 (c) is a side cross-sectional view illustrating an embodiment according to the invention of a coupling structure of a retention bar, a pack case, and a battery module, which are main parts of the present invention while figs. 7(a) and (b) disclose illustrative embodiments not forming part of the invention.
FIG. 8 is a perspective view illustrating a process of assembling a battery module into a battery pack case of the present invention.
FIG. 9 is a schematic side cross-sectional view illustrating a coupling structure of a battery pack of the present invention.

### (Reference Numerals)

1: BATTERY CELL
2: LONGITUDINAL DIRECTION UNIT CELL
10: BATTERY MODULE
11: BATTERY CELL ASSEMBLY
12: MODULE CASE
13: PARTITION WALL
20: PACK CASE
20A: UPPER FRAME
20B: LOWER PACK CASE
21: LOWER FRAME
22: FRONT AND REAR SIDE FRAMES
23: LEFT AND RIGHT SIDE FRAMES
24: COUPLING PROTRUSION
30: RETENTION BAR
31: UPPER PLATE
32: DOWNWARD BENDING PORTION
40: HEAT SINK
50: INSULATING MEMBER
R: ADHESIVE RESIN LAYER
T: TERMINAL BUSBAR
BB: HIGH VOLTAGE BUSBAR
100: BATTERY PACK

### [Detailed Description of the Preferred Embodiments]

Hereinafter, the present invention will be described in detail. First, the terms and words used in this specification and claims should not be interpreted as limited to commonly used meanings or meanings in dictionaries, and should be interpreted with meanings and concepts which are consistent with the technological scope of the invention based on the principle that the inventors have appropriately defined concepts of terms in order to describe the invention in the best way.

The terms "comprise," "include" and "have" used herein designate the presence of characteristics, numbers, steps, actions, components or elements described in the specification or a combination thereof, and it should be understood that the possibility of the presence or addition of one or more other characteristics, numbers, steps, actions, components, elements or a combination thereof is not excluded in advance.

In addition, when a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

The battery pack according to the present invention comprises: a battery module accommodating a plurality of battery cells; a pack case in which a plurality of battery modules are stacked in a horizontal direction and accommodated; a retention bar extended along the stacking direction of the battery module and is coupled to the pack case while pressing the upper surface of both sides of the stacked battery modules and includes the additional features as defined in claim 1.

### [Modes of the Invention]

There is no limit to the shape, size, type, etc. of the battery module accommodated in the battery pack of the present invention. In addition, the number of battery cells accommodated in the battery module is not limited. However, as illustrated above, in the case of small battery modules that have a small number of battery cells, it has a greater need for a retention bar described below because the problem of height unevenness is big. Especially, because the expandable battery module proposed by the present applicant has a module case extended lengthwise in the longitudinal direction and has a battery module stacked and accommodated inside the pack case in one direction (horizontally or in the width direction perpendicular to the longitudinal direction of the battery module) as illustrated in FIG. 2 or FIG. 3, it is appropriate to apply the retention bar.

Hereinafter, the present invention will be described by referring to the battery module with such expandability.

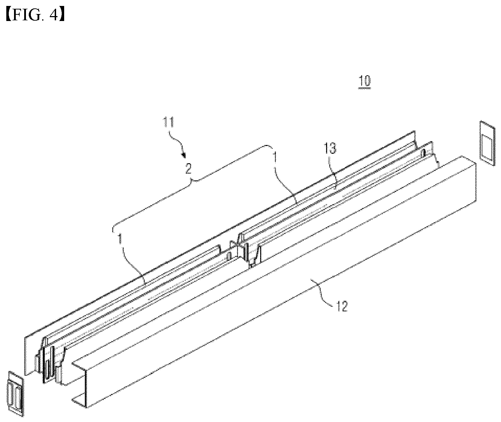

FIG. 4 is an exploded perspective view showing an exemplary embodiment of a scalable battery module.

As illustrated in FIG. 4, a battery module 10 with expandability contains a battery cell assembly 11 including longitudinal direction unit cells 2 and a module case 12 that accommodates the battery cell assembly 11. The longitudinal direction unit cell 2 has two or more battery cells 1 arranged in a row in the longitudinal direction. As the battery cell 1, one with leads formed at both ends in the longitudinal direction is employed. Theoretically, two or more battery cells must be connected to form a longitudinal direction unit cell 2. However, if the longitudinal direction unit cell is too long, the electrical connection between battery cells becomes complicated and the module case is also elongated, causing decrease in rigidity. Therefore, it is desirable to arrange about 2 to 3 battery cells in the longitudinal direction. Battery cells arranged in the longitudinal direction may be electrically connected. In addition, the longitudinal direction unit cells 2 are multiply stacked in the thickness direction of the battery cell 1 to comprise the battery cell assembly 11. Two or more rows are stacked in the battery cell thickness direction, and it is desirable to stack approximately 2 to 6 rows considering the electrical connection between the leads that are derived from the battery cell. As such, because the expandable module accommodates the battery cell assembly 11 extending in the longitudinal direction, the overall shape of the battery module 10 may have a cuboid shape elongated in the longitudinal direction. The expandable module 10 may have a predetermined partition wall 13 between the longitudinal direction unit cells 2.

The battery cell assembly 11 of the battery module 10 illustrated in FIG. 4 is formed by stacking two rows of the longitudinal direction unit cells 2, in which two battery cells 1 are connected in the longitudinal direction. A terminal busbar is connected between the battery cells 1 arranged in the longitudinal direction, and the end of this terminal busbar can be connected to electronic components such as a high-voltage busbar by being exposed from the upper portion of the battery module 10.

The present invention also comprises a pack case 20 that accommodates the battery module.

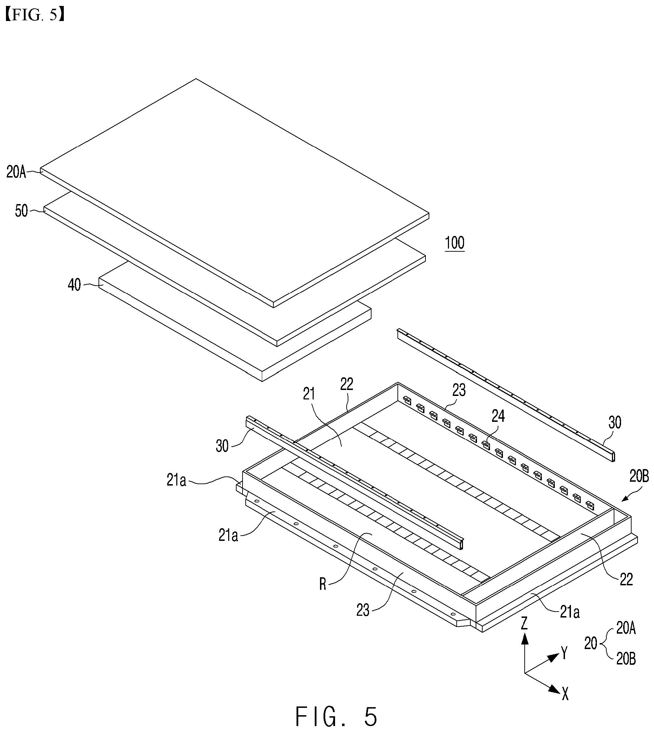

FIG. 5 is a perspective view illustrating the structure of the pack case 20 of the battery pack 100 according to an exemplary embodiment of the present invention.

In FIG. 5, the X-direction is the stacking direction (the longitudinal direction of the battery pack) of the battery module, the Y-direction is the longitudinal direction of the battery module or the width direction of the battery pack, and the Z-direction is the vertical direction, that is, the height direction.

The pack case 20 has an upper frame 20A, a lower frame 21 on which the battery modules 10 are stacked and settled, and side frames 22,23 that are positioned between the upper and the lower frames.

The side frames 22,23 are provided at four locations on the front, back, left, right sides.

In FIG. 5, the lower frame 21 and the side frames 22,23 are integrally formed to constitute a lower pack case 20B accommodating the battery modules. The lower pack case 20B can be formed by welding the above-described side frames 22,23 and the lower frame 21, or can be formed by molding a single plate. The lower frame has a portion 21a that is extended outward in all direction, and this extended portion 21a becomes a vehicle coupling portion to which a fastening member is fastened in order to allow a battery pack to be coupled to vehicles, etc.

An adhesive resin layer R may be applied to the lower frame 21, and when the battery modules 10 are stacked and arranged in the lower frame 21, this adhesive resin layer R serves to fix the battery modules.

When the battery module 10 is accommodated and fixed inside the lower pack case 20B, the upper frame 20A is coupled by covering the lower pack case 20B.

The adhesive resin layer R may be applied between the upper frame 20A and the battery module even after the battery module 10 is accommodated as occasion demands. When thermally conductive thermal resin is used as the adhesive resin layer R, aside from the adhesive fixing function, it can perform a heat dissipation function. A silicon-based resin, modified silicone resin, acrylic resin, etc. can be used as a thermally conductive thermal resin. If such thermally conductive thermal resin is charged between the battery module 10 and the upper frame 20A, or between the battery module 10 and the lower frame 21 of the lower pack case 20B, it can effectively absorb heat generated inside the battery pack 100. In addition, if a heat sink 40 is installed in the lower portion of the upper frame 20A, it can further improve heat dissipation efficiency by transferring heat from the thermally conductive thermal resin to the heat sink 40.

If necessary, an insulating member 50 can be installed between the upper frame 20A and heat sink 40.

As illustrated above, in a case where a plurality of battery modules 10 are stacked and accommodated into a single pack case 20 in a specific direction, the height of the battery module 10 may not be kept the same inside the battery pack 100 depending on the charge state of the adhesive resin layer R formed between the battery module 10 and the pack case 20 (refer to FIG. 2). In addition, due to a swelling phenomenon caused by gas generated inside the battery module 10 during use of the battery pack 100, the battery modules are displaced in a specific direction, which may adversely affect the connection status with other electronic components (refer to FIG. 3). The present invention is directed to prevent such phenomenon, and it is characterized by having a retention bar 30 that regulates the displacement of the battery modules 10 in the height direction.

The retention bar in the present disclosure means a bar for stably fixating and maintaining the battery module 10 inside the pack case 20 by pressing the battery module 10 so as not to fluctuate in height as described above. Because the retention bar 30 is fixing and maintaining a plurality of battery modules 10, it extends along the stacking direction of the battery modules 10 and is coupled to the pack case. That is, when the battery modules 10 are stacked in the horizontal direction within the pack case, the retention bar 30 regulates the movement of the battery module 10 in the height direction (Z-direction) by being extended and installed in the stacked horizontal direction.

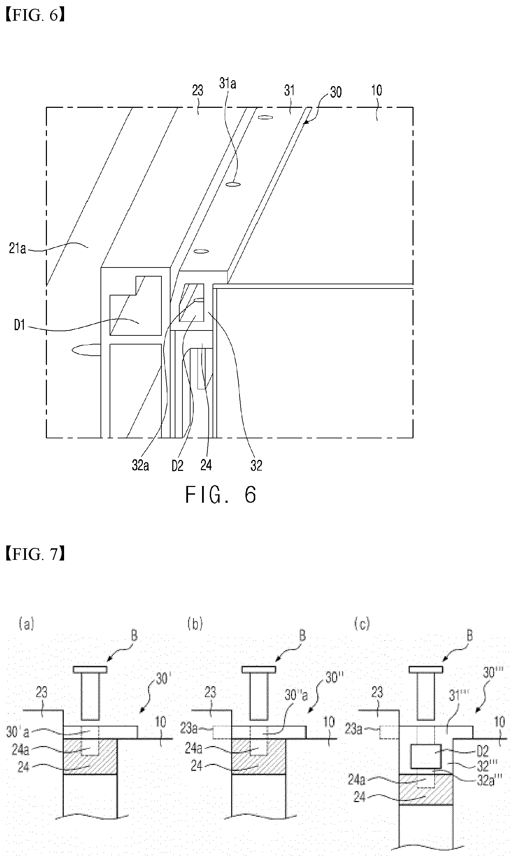

FIG. 6 is a side cross-sectional view illustrating an exemplary embodiment of a coupling structure of a retention bar, a pack case, and a battery module, which are main parts of the present invention.

While the illustration of the battery module 10 was omitted and only the pack case was illustrated in FIG. 5 for the convenience of explanation, FIG. 6 shows that the battery module 10 is accommodated in the pack case. For example, it is assuming that the expandable battery module 10 extended in the longitudinal direction is stacked in the horizontal direction (specifically in the width direction of the battery module) at intervals from the left and right side frames 23 of the pack case.

Specifically, the retention bar 30 regulates the movement of the battery module 10 by pressurizing upper surface of both sides of the battery module 10 and being coupled to the pack case 20. That is, two retention bars 30 are provided in pairs along the stacking direction of the battery modules 10 in order to pressurize the upper surface of both sides of the battery module 10.

In addition, the retention bar 30 has a pressurizing portion that pressurizes the upper surface of the battery module 10 and the pressurizing portion is coupled to the pack case 20. Referring to FIG. 5 and FIG. 6, the retention bars 30 are coupled to the left and right side frames 23 constituting the lower pack case 20B. The left and right side frames 23 have coupling protrusion 24 formed on the inner side facing the battery module 10. The retention bar 30 can pressurize the upper surface of both sides of the battery module 10 by being coupled to the upper surface of the coupling protrusion 24. In an exemplary embodiment of FIG. 6, the retention bar 30 is composed of an upper plate 31 that pressurizes the upper surface of the battery module 10, and a bending portion 32 that is bent downward from the upper plate 31. Fastening holes 31a,32a through which the fastening member B are coupled are formed through one side of the upper plate 31 and the bending portion 32 below the upper plate. In addition, a coupling protrusion 24 protruding from the inner side of the left and right side frames 23 of the lower side pack case 20B is provided at the bottom of the bending portion 32, and a coupling hole 24a corresponding to the fastening holes 31a,32a is also formed in the coupling protrusion 24. Therefore, when a fastening element B is fastened to the fasteners 31a,32a,24a from above, the retention bar 30 presses the upper surface of both sides of the battery module 10 by the pressing force from above while being coupled to the coupling protrusion 24 of the side frame 23. Since the retention bar 30 of the present embodiment has an upper plate 31 and a downward bending portion 32, not only the upper plate 31 pressurizes the upper surface of both sides of the battery module 10, but also the inner side of the downward bending portion 32 connected to the upper plate pressurizes the battery module 10. Therefore, because the retention bar 30 of the present embodiment firmly presses and fixes both corner parts of the battery module 10, it can fix and maintain a plurality of battery modules 10 more securely. As illustrated in FIG. 6, a predetermined weight loss parts D1,D2 may be formed inside the side frame 23 or the bending portion of the retention bar 30 in order to reduce the weight.

The shape of the retention bar 30 and its coupling structure with the pack case 20 are not restricted to the above, and may be available in other shapes. For example, as in the structure of inserting the retention bar 30 into the fitting groove of the side frames 22,23 of the pack case 20, it can couple the retention bar 30 to the pack case 20 without the fastening member B. However, if there is the fastening member B, the retention bar 30 can be more firmly coupled to the pack case 20. In addition, it is favorable to fasten with the fastening member B in order to increase the upper pressing force of the pack case 20. If the retention bar 30 is coupled to the pack case 20 without the fastening member B, the coupling process may be simplified. Accordingly, it becomes advantageous to automate the process of coupling the retention bar. However, even in the case of fastening with a fastening member, it is possible to fasten a plurality of fastening points by a robot or the like. Therefore, the battery pack assembly process can be automatized using the retention bar of the present invention, and thus it is convenient to apply to mass-production process.

FIG. 7 is a side cross-sectional view illustrating many exemplary embodiments of coupling structure of a retention bar, a pack case and a battery module, which are main parts of the present invention. Same as the one in FIG. 6, the exemplary embodiment in FIG. 7 also has a coupling protrusion 24 formed on the inner side of the side frame 23. Because such coupling protrusion 24 forms a matching coupling portion facing the retention bar 30, and because it generates a pressing force in the vertical direction when the fastening member B is fastened from the top, it is appropriate to regulate the movement of the battery module 10 in the height direction.

FIG. 7(a) shows a retention bar 30' formed in a flat plate shape without a bending part, and it can couple the retention bar 30' to the coupling protrusion 24 with a fastening element B by positioning portion of the retention bar 30' on the upper surface of the battery module and having the fastening element extend through fastening hole 30'a. Because there is no bending part, it does not pressurize the entire corner portion of the battery module 10 compared to FIG. 6, it can sufficiently control the movement of the battery module 10 in the height direction.

FIG. 7(b) is illustrating a fitting groove 23a formed into which one side of the retention bar 30" is inserted is formed on the inner surface of the left and right side frames 23 above the coupling protrusion 24. The movement of the battery module 10 can be regulated by inserting the retention bar 30" into the fitting groove 23a and coupling a flat plate-shaped retention bar 30"to the coupling protrusion 24 from above using a fastening member B extending through fastening hole 30"a. In this case, since the fitting is added compared to FIG. 7(a), the retention bar 30" can be more firmly coupled to the side frame than in FIG. 7(a).

Similar to FIG. 6, the retention bar 30‴ in FIG. 7(c) has an upper plate 31‴ and a downward protruding portion 32"'. In addition, a fitting groove 23a is formed into which one side of the retention bar 30"' is inserted is formed on the inner surface of the left and right side frames 23 above the coupling protrusion 24. The movement of the battery module 10 can be regulated by inserting one side of the upper plate 31‴ of the retention bar 30‴ into the fitting groove 23a, and by coupling the downward protruding portion 32"'of the retention bar 30‴ to the coupling protrusion 24 from above using a fastening member B extending through fastening hole 32a"'. In addition, in this case, because the downward protruding portion 32‴ is inserted between the side frame and the battery module 10, the retention bar 30 can firmly fix and maintain the corner portion of one side of the battery module.

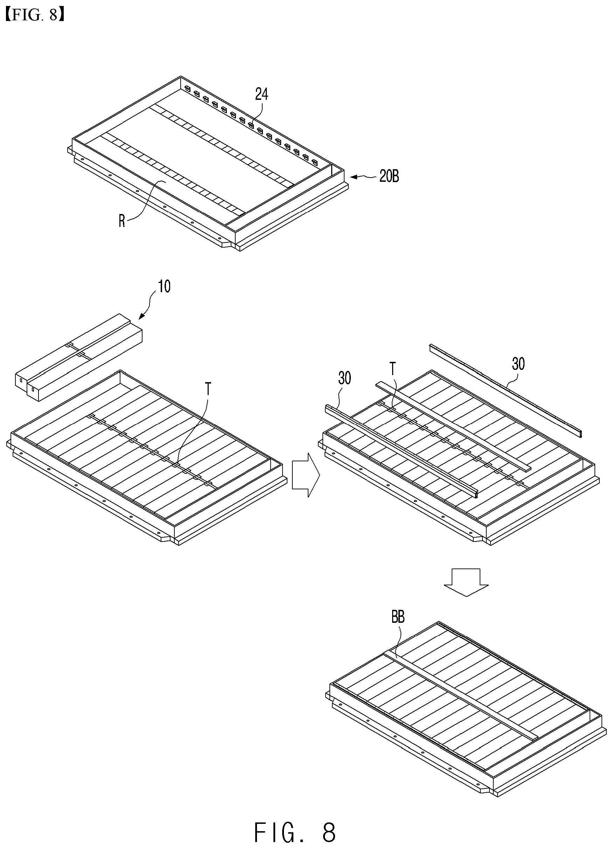

FIG. 8 is a perspective view illustrating a process of assembling a battery module into a battery pack case of the present invention.

First, an adhesive resin layer R is applied to the lower pack case 20B which is made of a lower frame 21 and side frames 22,23. Alternatively, after accommodating the battery module 10 into the lower pack case 20B, the adhesive resin layer R can be charged between the battery module 10 and the lower pack case 20B through a predetermined injection hole.

Next, the expandable battery modules 10 are stacked and disposed in the horizontal direction inside the lower pack case 20B. Horizontal direction in the present embodiment is the longitudinal direction of the pack using the battery pack 100 as the reference, and it is the width direction of the module using the battery module 10 as the reference. In any case, the retention bar 30 needs to be installed to extend along the stacking direction of the battery module 10.

After the battery module 10 is arranged, a pair of left and right retention bars 30 are coupled to the left and right side frames 23 of the lower pack case 20B as illustrated in FIG. 6. As illustrated above, since the coupling protrusion 24 is formed from the inner surface of the left and right side frames 23 and the fastening position is set constant, when fastening the retention bar 30 on the coupling protrusion 24 from above, the upper surface of both sides of the battery module 10 are pressurized and fixed in the battery pack 100. By the fastening, the battery module 10 can be maintained in uniform height inside the battery pack 100 while pressing the lower adhesive resin layer R. As such, because the present invention can fix and maintain a plurality of battery modules inside the battery pack 100 by coupling the retention bar 30 to the pack case, it can be said that the structure minimizes fastening points. Specifically, it can maintain the battery module 10 at a uniform height inside the battery pack 100 with the retention bar 30, or with the retention bar 30 and the adhesive resin layer R. Due to this simple coupling structure, the space within the battery pack 100, the vertical space, for example, can be secured, and other necessary members such as electrical connection members can be installed in this space. Therefore, according to the present invention, when assembling the battery module 10 into a pack, the internal space utilization can be maximized by minimizing fastening points and stably fix the battery modules inside the pack, and the coupling rigidity between the battery module 10 and the pack case 20 can be improved.

When battery modules are installed at a uniform height inside the battery pack 100 by the retention bar 30, the battery modules can be electrically connected by connecting a high-voltage busbar BB to the terminal busbar T exposed on the battery module 10. Here, because the battery modules are disposed at a uniform height in a structure specific to the present invention, the high-voltage busbar BB may also be welded to the battery modules at a uniform height. In addition, it is possible to install and connect parts necessary for the battery pack, such as a low-voltage busbar and a sensing cable.

Although not illustrated in FIG. 8, the battery pack assembly may be completed by applying (charging) the adhesive resin layer R on the battery module 10, installing the heat sink 40, and coupling the upper frame 20A.

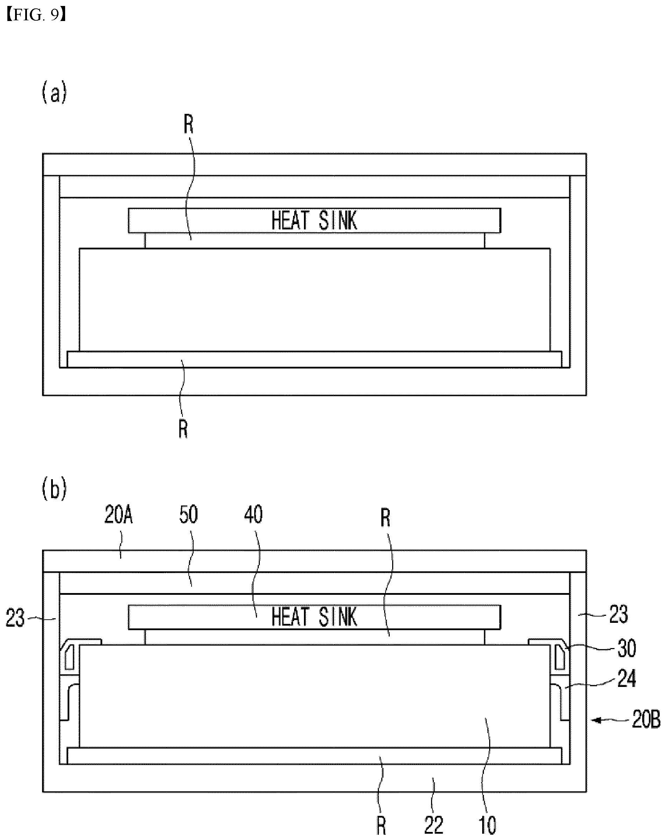

FIG. 9 is a schematic side cross-sectional view illustrating a coupling structure of a battery pack of the present invention.

FIG. 9(a) is illustrating the coupling structure of a battery pack not provided with a height regulating member, and the adhesive resin layer R is charged between the lower frame and the battery module 10. However, because this structure is not a structure that can regulate the movement of the battery module 10 in the height direction, the height of each battery module 10 cannot be uniform. Accordingly, when the adhesive resin layer R and the heat sink are installed in the upper portion of the battery module 10, the distance between the heat sink and the battery module 10 may not be constant, so that the thermal resistance between each battery module 10 and the heat sink is different, causing temperature deviation among the modules. In addition, when electronic components such as the high-voltage busbar are welded on the module, deviations may occur.

Meanwhile, in the coupling structure of the present invention shown in FIG. 9(b), because the retention bar 30 is coupled to the side frame 23 while pressurizing the upper surface of both sides of the battery module 10, the movement of the battery modules in the height direction is regulated. Therefore, it can prevent above-mentioned problems by maintaining battery modules at a uniform height.

In addition, even after assembling the battery pack 100, when swelling as in FIG. 3 occurs, because the battery pack 100 of the present invention has battery modules whose movement in the height direction is regulated by the retention bar 30, it has an advantage in that assembly deformation or displacement of the battery modules can be controlled.

The embodiments disclosed in the present invention are considered in a descriptive sense only and not for purposes of limitation, and the scope of the invention is not limited by the embodiments. It should be interpreted that the scope of the invention is defined by the appended claims.

Meanwhile, in the present specification, although the terms such as, upward, downward, left, right, forward, and rearward, which indicate directions, have been used, the terms are only for the sake of convenience in the description, and it is clear that the directions change according to a position of a target object or observer.

## Claims

1. A battery pack (100) comprising:
a plurality of battery modules (10), each battery module (10) accommodating a plurality of battery cells (1);
a pack case (20) configured to accommodate the plurality of battery modules (10) stacked in a horizontal direction; and
a pair of retention bars (30, 30‴) extending along the stacking direction of the battery modules (10),
the pair of retention bars (30, 30‴) being coupled to the pack case (20) while pressing upper surfaces at opposite ends of the stacked battery modules (10),
wherein the pack case (20) includes:
an upper frame (20A);
a lower frame (21) on which the battery modules (10) are located; and
a front side frame, a rear side frame, a left side frame, and a right side frame located between the upper frame (20A) and the lower frame (21),
wherein each retention bar (30, 30‴) is composed of
an upper plate (31, 31‴) that pressurizes the upper surface of the stacked battery module (10), and
a bending portion (32, 32‴) that is bent downward from the upper plate (31, 31‴), wherein the left and right side frames (23) have coupling protrusion (24) formed on the inner side facing the battery module (10) and provided at the bottom of the bending portion (32, 32‴),
**characterized in that**,
fastening holes (31a, 32a, 32a‴ ) are formed through one side of the upper plate (31, 31‴) and
the bending portion (32, 32‴) below the upper plate (31, 31‴),
a coupling hole (24a) corresponding to the fastening holes (31a,32a) is formed in the coupling protrusion (24), and
a fastening element (B) is fastened to the fastening holes (31a,32a) and the coupling hole (24a) from above.

2. The battery pack (100) of claim 1, wherein the plurality of battery cells (1) of each battery module (10) is arranged as a battery cell assembly (11) in which a plurality of longitudinal unit cells (2), each of which is composed of at least two battery cells (1) of the plurality of battery cells arranged in a line in a longitudinal direction, are stacked in a thickness direction of the battery cells (1), and
wherein each battery module (10) has a cuboid shape elongated in the longitudinal direction to accommodate the battery cell assembly (11).

3. The battery pack (100) of claim 2, wherein the longitudinal direction unit cells (2) are arranged in two rows in the longitudinal direction,
wherein a terminal busbar (T) is connected between the battery cells (1) arranged in the longitudinal direction, and an end of the terminal busbar (T) is exposed at an upper portion of the battery module (10).

4. The battery pack (100) of claim 3, further comprising a high voltage busbar (BB) extending in a width direction of the battery modules (10), the high voltage busbar (BB) being coupled to the terminal busbar (T) of each battery module (10).

5. The battery pack (100) of claim 1, wherein the lower frame, the front side frame, the rear side frame, the left side frame, and the right side frame are integrally provided.

6. The battery pack (100) of claim 1, wherein the inner surface of each of the left side frame and the right side frame includes a fitting groove (23a) above the coupling protrusion (24), and
wherein one side of the upper plate (31‴) of the corresponding retention bar (30‴) is fitted to the fitting groove (23a).

7. The battery pack (100) of claim1, wherein an adhesive resin layer (R) is filled between the battery modules (10) and the lower frame (21).

8. The battery pack (100) of claim 7, wherein an adhesive resin layer (R) is filled between the battery modules (10) and the upper frame (20A).

9. The battery pack (100) of claim 8, wherein a heat sink (40) is located between the upper frame (20A) and the adhesive resin layer (R) filled between the battery modules (10) and the upper frame (20A).

10. The battery pack (100) of claim 9, wherein an insulating member (50) is located between the upper frame (20A) and the heat sink (40).

## Patentansprüche

1. Batteriepack (100), umfassend:
eine Vielzahl von Batteriemodulen (10), wobei jedes Batteriemodul (10) eine Vielzahl von Batteriezellen (1) aufnimmt;
ein Packgehäuse (20), das so konfiguriert ist, dass es die Vielzahl von Batteriemodulen (10) aufnimmt, die in einer horizontalen Richtung gestapelt sind; und
ein Paar Haltestangen (30, 30"), die sich entlang der Stapelrichtung der Batteriemodule (10) erstrecken,
wobei das Paar Haltestangen (30, 30") mit dem Packgehäuse (20) gekoppelt ist, während sie auf obere Oberflächen an gegenüberliegenden Enden der gestapelten Batteriemodule (10) drücken,
wobei das Packgehäuse (20) Folgendes einschließt:
einen oberen Rahmen (20A);
einen unteren Rahmen (21), auf dem sich die Batteriemodule (10) befinden; und
einen vorderen Seitenrahmen, einen hinteren Seitenrahmen, einen linken Seitenrahmen und einen rechten Seitenrahmen, die sich zwischen dem oberen Rahmen (20A) und dem unteren Rahmen (21) befinden,
wobei jede Haltestange (30, 30") zusammengesetzt ist aus
einer oberen Platte (31, 31"), die die obere Oberfläche des gestapelten Batteriemoduls (10) unter Druck setzt, und
einem Biegeabschnitt (32, 32"), der von der oberen Platte (31, 31") nach unten gebogen ist,
wobei der linke und der rechte Seitenrahmen (23) einen Kopplungsvorsprung (24) aufweisen, der an der dem Batteriemodul (10) zugewandten Innenseite ausgebildet und an der Unterseite des Biegeabschnitts (32, 32") vorgesehen ist,
**dadurch gekennzeichnet, dass**
Befestigungslöcher (31a, 32a, 32a") durch eine Seite der oberen Platte (31, 31") und des Biegeabschnitts (32, 32") unterhalb der oberen Platte (31, 31") ausgebildet sind,
ein Kopplungsloch (24a), das den Befestigungslöchern (31a,32a) entspricht, in dem Kopplungsvorsprung (24) ausgebildet ist, und
ein Befestigungselement (B) an den Befestigungslöchern (31a, 32a) und dem Kopplungsloch (24a) von oben befestigt ist.

2. Batteriepack (100) nach Anspruch 1, wobei die Vielzahl von Batteriezellen (1) jedes Batteriemoduls (10) als Batteriezellenanordnung (11) angeordnet ist, in der eine Vielzahl von Längs-Einheitszellen (2), von denen jede aus mindestens zwei Batteriezellen (1) der Vielzahl von in einer Linie in einer Längsrichtung angeordneten Batteriezellen zusammengesetzt ist, in einer Dickenrichtung der Batteriezellen (1) gestapelt sind, und wobei jedes Batteriemodul (10) eine quaderförmige Form aufweist, die in der Längsrichtung langgestreckt ist, um die Batteriezellenanordnung (11) aufzunehmen.

3. Batteriepack (100) nach Anspruch 2, wobei die Längs-Einheitszellen (2) in zwei Reihen in der Längsrichtung angeordnet sind,
wobei eine Anschluss-Sammelschiene (T) zwischen den in der Längsrichtung angeordneten Batteriezellen (1) verbunden ist, und ein Ende der Anschluss-Sammelschiene (T) an einem oberen Abschnitt des Batteriemoduls (10) freigelegt ist.

4. Batteriepack (100) nach Anspruch 3, ferner umfassend eine Hochspannungs-Sammelschiene (BB), die sich in einer Breitenrichtung der Batteriemodule (10) erstreckt, wobei die Hochspannungs-Sammelschiene (BB) mit der Anschluss-Sammelschiene (T) jedes Batteriemoduls (10) gekoppelt ist.

5. Batteriepack (100) nach Anspruch 1, wobei der untere Rahmen, der vordere Seitenrahmen, der hintere Seitenrahmen, der linke Seitenrahmen und der rechte Seitenrahmen einstückig vorgesehen sind.

6. Batteriepack (100) nach Anspruch 1, wobei die Innenfläche jedes des linken Seitenrahmens und des rechten Seitenrahmens eine Passnut (23a) oberhalb des Kopplungsvorsprungs (24) einschließt, und
wobei eine Seite der oberen Platte (31‴) der entsprechenden Haltestange (30‴) in die Passnut (23a) eingepasst ist.

7. Batteriepack (100) nach Anspruch 1, wobei eine Klebeharzschicht (R) zwischen die Batteriemodule (10) und den unteren Rahmen (21) gefüllt ist.

8. Batteriepack (100) nach Anspruch 7, wobei eine Klebeharzschicht (R) zwischen die Batteriemodule (10) und den oberen Rahmen (20A) gefüllt ist.

9. Batteriepack (100) nach Anspruch 8, wobei ein Kühlkörper (40) zwischen dem oberen Rahmen (20A) und der Klebeharzschicht (R) angeordnet ist, die zwischen die Batteriemodule (10) und den oberen Rahmen (20A) gefüllt ist.

10. Batteriepack (100) nach Anspruch 9, wobei ein Isolierelement (50) zwischen dem oberen Rahmen (20A) und dem Kühlkörper (40) angeordnet ist.

## Revendications

1. Bloc-batterie (100) comprenant :
une pluralité de modules de batterie (10), chaque module de batterie (10) logeant une pluralité de cellules de batterie (1) ;
un boîtier de bloc (20) configuré pour loger la pluralité de modules de batterie (10) empilés dans une direction horizontale ; et
une paire de barres de retenue (30, 30") s'étendant le long de la direction d'empilement des modules de batterie (10),
la paire de barres de retenue (30, 30") étant couplée au boîtier de bloc (20) tout en pressant des surfaces supérieures à des extrémités opposées des modules de batterie empilés (10),
dans lequel le boîtier de bloc (20) inclut :
un cadre supérieur (20A) ;
un cadre inférieur (21) sur lequel les modules de batterie (10) sont situés ; et
un cadre latéral avant, un cadre latéral arrière, un cadre latéral gauche et un cadre latéral droit situés entre le cadre supérieur (20A) et le cadre inférieur (21),
dans lequel chaque barre de retenue (30, 30") est composée
d'une plaque supérieure (31, 31") qui met sous pression la surface supérieure du module de batterie empilé (10), et
d'une partie de pliage (32, 32") qui est pliée vers le bas depuis la plaque supérieure (31, 31"),
dans lequel les cadres latéraux gauche et droit (23) ont une saillie de couplage (24) formée sur le côté intérieur faisant face au module de batterie (10) et prévue au bas de la partie de pliage (32, 32"),
**caractérisé en ce que**,
des trous de fixation (31a, 32a, 32a") sont formés à travers un côté de la plaque supérieure (31, 31") et la partie de pliage (32, 32") sous la plaque supérieure (31, 31"),
un trou de couplage (24a) correspondant aux trous de fixation (31a,32a) est formé dans la saillie de couplage (24), et
un élément de fixation (B) est fixé aux trous de fixation (31a,32a) et au trou de couplage (24a) par le dessus.

2. Bloc-batterie (100) selon la revendication 1, dans lequel la pluralité de cellules de batterie (1) de chaque module de batterie (10) est agencée sous la forme d'un ensemble de cellules de batterie (11) dans lequel une pluralité de cellules unitaires longitudinales (2), dont chacune est composée d'au moins deux cellules de batterie (1) de la pluralité de cellules de batterie agencées en une ligne dans une direction longitudinale, sont empilées dans une direction de l'épaisseur des cellules de batterie (1), et
dans lequel chaque module de batterie (10) a une forme cuboïde allongée dans la direction longitudinale pour loger l'ensemble de cellules de batterie (11).

3. Bloc-batterie (100) selon la revendication 2, dans lequel les cellules unitaires de direction longitudinale (2) sont agencées en deux rangées dans la direction longitudinale,
dans lequel une barre omnibus de borne (T) est connectée entre les cellules de batterie (1) agencées dans la direction longitudinale, et une extrémité de la barre omnibus de borne (T) est exposée au niveau d'une partie supérieure du module de batterie (10).

4. Bloc-batterie (100) selon la revendication 3, comprenant en outre une barre omnibus haute tension (BB) s'étendant dans une direction de la largeur des modules de batterie (10), la barre omnibus haute tension (BB) étant couplée à la barre omnibus de borne (T) de chaque module de batterie (10).

5. Bloc-batterie (100) selon la revendication 1, dans lequel le cadre inférieur, le cadre latéral avant, le cadre latéral arrière, le cadre latéral gauche et le cadre latéral droit sont prévus d'un seul tenant.

6. Bloc-batterie (100) selon la revendication 1, dans lequel la surface intérieure de chacun du cadre latéral gauche et du cadre latéral droit inclut une rainure d'ajustement (23a) au-dessus de la saillie de couplage (24), et
dans lequel un côté de la plaque supérieure (31‴) de la barre de retenue correspondante (30‴) est ajusté dans la rainure d'ajustement (23a).

7. Bloc-batterie (100) selon la revendication 1, dans lequel une couche de résine adhésive (R) est remplie entre les modules de batterie (10) et le cadre inférieur (21).

8. Bloc-batterie (100) selon la revendication 7, dans lequel une couche de résine adhésive (R) est remplie entre les modules de batterie (10) et le cadre supérieur (20A).

9. Bloc-batterie (100) selon la revendication 8, dans lequel un dissipateur thermique (40) est situé entre le cadre supérieur (20A) et la couche de résine adhésive (R) remplie entre les modules de batterie (10) et le cadre supérieur (20A).

10. Bloc-batterie (100) selon la revendication 9, dans lequel un élément isolant (50) est situé entre le cadre supérieur (20A) et le dissipateur thermique (40).
